# EUROPEAN PATENT SPECIFICATION

(11) **EP 1 884 104 B1**
(45) Date of publication and mention of the grant of the patent: **29.07.2009**
(21) Application number: 06727772.3
(22) Date of filing: 30.03.2006
(51) Int. Cl.: H04L 29/08

(54) **INFORMATION AND MANAGEMENT SERVICE PORTAL FOR SUBSCRIBERS OF COMMUNICATION SYSTEMS**
INFORMATIONS- UND VERWALTUNGSDIENSTPORTAL FÜR TEILNEHMER VON KOMMUNIKATIONSSYSTEMEN
PORTAIL DE PRESTATION DE SERVICES D'INFORMATION ET DE GESTION DESTINE A DES ABONNES DE SYSTEMES DE COMMUNICATION

(30) Priority: 24.05.2005 EP 05011226; 24.08.2005 US 209851
(43) Date of publication of application: 06.02.2008
(73) Proprietor: Nokia Corporation, 02150 Espoo (FI)
(72) Inventor: HELLGREN, Vesa, FI-00530 Helsinki (FI)
(74) Representative: TBK-Patent
(86) International application number: PCT/IB2006/050964
(87) International publication number: WO 2006/126105

(56) References cited:
- WO-A-20/05009053
- US-A1- 2002 187 775
- US-A1- 2004 049 589
- US-A1- 2005 108 574

## Description

### Field of the invention

The present invention relates to a provision of an information and management service portal for subscribers of communication systems. In particular, the present invention relates to a method, network node, terminal, system, and computer program product for providing a subscriber of a communication system, e.g. mobile communication systems of 3GPP, GPRS or CDMA type, with the capability to access properties of an ongoing connection.

### Background of the invention

Until recently, the development of communication systems and technology has basically been focused on fundamental communication issues, i.e. transmission and switching of calls, for example. In an effort to provide better communication possibilities to subscribers, the evolution of communication systems has come to different architectural and technological solutions. Examples of modern communication systems in this regard are for example 3GPP and 3GPP2 (3GPP: 3^{rd} Generation Partnership Program) systems, CDMA (Code Division Multiple Access) systems, GPRS (General Packet Radio Service) systems, and UMTS (Universal Mobile Telecommunication System). Also non-mobile communication systems such as IP-based (IP: Internet Protocol) can be mentioned.

Recently, there has however also emerged a focus on the services that such modem communication systems and new technologies make possible. With respect to the trend of modem communication systems, whether of mobile or non-mobile type, being based on packet-switched transmissions, bringing the Internet and/or related services to (mobile) subscribers is one of the major interests of system and network operators.

Thereby, one of the (mobile) services worth mentioning is generally referred to as content delivery (i.e. downloading) to (mobile) terminals. Among others, content available e.g. via the Internet includes music, games, news, and so on. For this purpose, subscribers have to be connected to the content available for them, and from an operators' point of view the subscribers have to be charged according to the value of the content delivered.

Accordingly, there have been introduced specialized subsystems within the generic communication environment, such as for example an IP Multimedia Subsystem (IMS) or an Intelligent Content Delivery (ICD) subsystem. In general, online control subsystems also belong to this class of subsystems.

Besides rather general information as mentioned above, subscribers are also (and presumably especially) interested in information relating to themselves personally. For example, a subscribers could be interested in information concerning his or her current connection and personal settings. As one example case, one could image a subscriber communicating by using a pre-paid phone card, thus the subscriber having to know information on remaining quota, e.g. how much time is left for communication or how much his or her current connection costs per time unit, which may depend on the protocol or service used, the subscriber's personal profile, or the quality of service (QoS) set for the current connection.

On the other hand, the subscriber may also be wishing to modify previously selected settings. Such settings potentially include the services being used or being currently subscribed to (e.g. e-mail, multimedia messaging, web browsing). Conveniently, it should be possible to modify and manage such settings even during an ongoing connection, and also that the newly selected services can be used immediately in the ongoing connection.

In current (mobile) data networks, the (mobile or non-mobile) subscribers cannot really get all the information, which is relevant to them. The subscribers might want to know how much an ongoing connection, such as a PDP (packet data protocol) session, has been used so far in terms of bytes, hits and time. In addition, the (mobile) subscriber would potentially like to know how much the usage has been in monetary units. Other relevant information would be the roaming status, the set of active services, various statistics (e.g. in terms of monetary units or time), and all kinds of bulletin board messages coming from the operator.

Subscribers might also want to activate services or subscriptions while a connection, such as a PDP (packet data protocol) context, is active. The activation of services and subscriptions thus logically belongs to the same context.

For providing these services, there are conventionally provided so-called information portals in the prior art communication systems by the respective system or network operators. Such a portal is described in US 2004/0049 589.

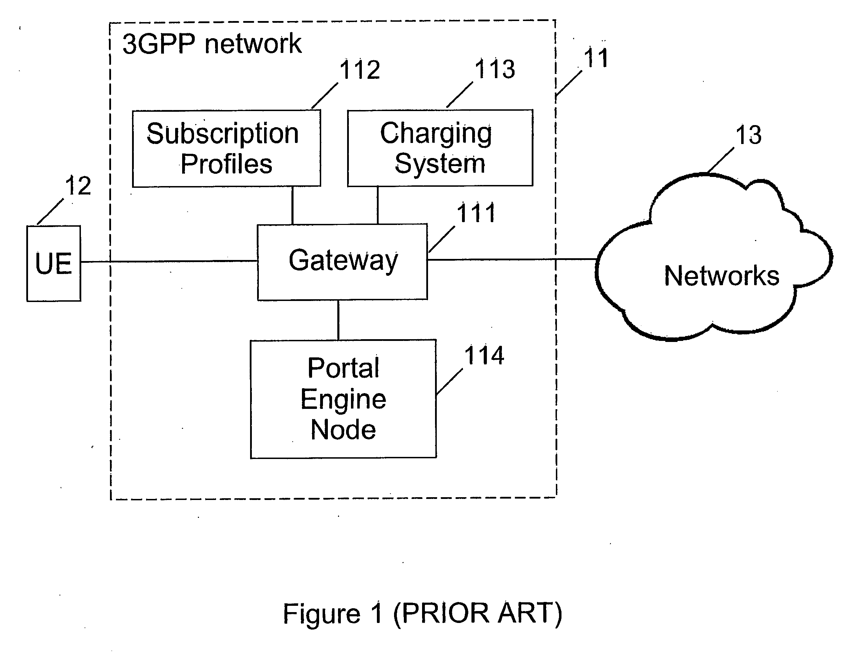

In the attached drawings, Fig. 1 shows a block diagram illustrating a basic structure of a mobile communication system according to the prior art.

According to Fig. 1, a terminal 12 is connected to a packet-switched communication network 11 in accordance with 3GPP and/or 3GPP2 specifications. The terminal is potentially an user equipment, thus being denoted by UE, or a mobile station MS. The communication network is potentially also a CDMA-based or GPRS-based network or the like. It is also conceivable that the dashed box in Fig. 1 only illustrates a part or sub-network of the underlying communication network. In this sense, the dashed box may also represent an IP Multimedia Subsystem (IMS), or an Intelligent Content Delivery (ICD) subsystem, or a packet core part. For the sake of simplicity, the communication network is illustrated only by way of those entities being most relevant for the understanding of the prior art in view of the present invention.

In Fig. 1, the terminal 12 is connected to a gateway node 111 of a communication network 11. Although the connection is illustrates as being a direct connection, one or more other network nodes may also be located in-between the terminal 12 and the gateway node 111, such as e.g. a serving GPRS support node (SGSN). The gateway node 111 is potentially a gateway GPRS support node (GGSN), a packet data gateway (PDG) node, a traffic plane function (TPF) node according to 3GPP specifications, but may also be a packet data serving node (PDSN) according to 3GPP2 and/or CDMA specifications, or an online charging system (OCS) node or functionality. In general, the illustrated gateway node 111 is any network control element providing an interface between at least two preferably packet-switched communication networks of the underlying (mobile) communication system. In the example of Fig. 1, there is provided an interface between a 3GPP network and other data networks 13, such as for example the Internet or an X.25- based network. Accordingly, the gateway node 111 provides the terminal 12 (and thus its user or subscriber) with a connection to any data networks 13 via the 3GPP network 11.

For this purpose, the gateway node 111 (such as for example a traffic analyzer (TA) manufactured by Nokia Corporation^{®}) is connected with other network nodes of the 3GPP communication network 11. In the example case depicted, these are a node 112 managing subscription profiles of subscribers of the network, a node 113 representing a charging system for charging (billing) subscribers of the network for services and/or subscriptions used, and a portal engine node 114. The portal engine node 114 provides the user or subscriber of the terminal 12 with an information portal as mentioned above. As one example for a portal engine node as illustrated in Fig. 1, a content analyzer (CA) manufactured by Nokia Corporation^{®} can be mentioned.

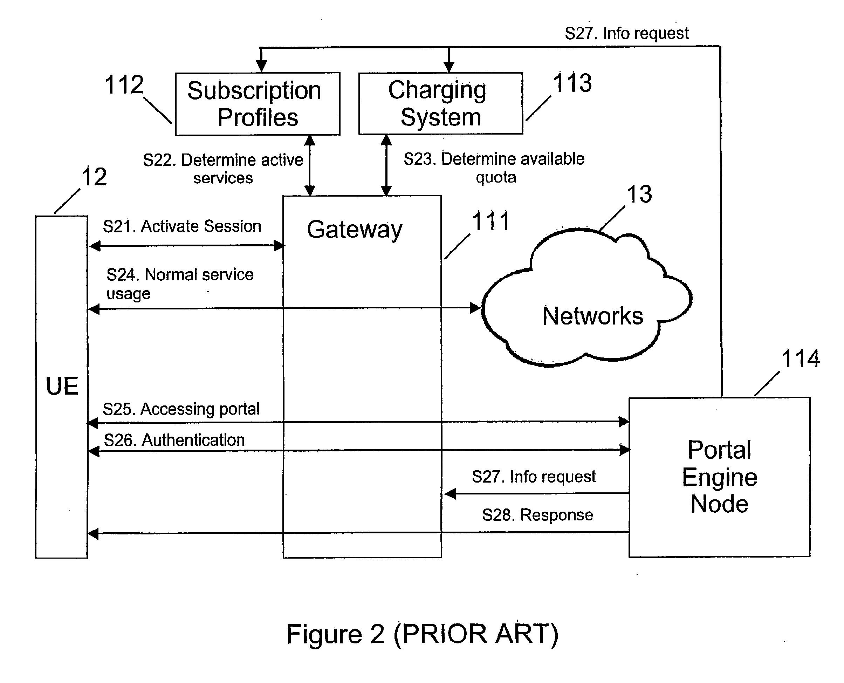

The operation of the depicted system in connection with the use of an information portal according to the prior art is illustrated in Fig. 2. Accordingly, Fig. 2 shows an example of an information portal implementation according to the prior art.

According to Fig. 2, the terminal 12 initiates (i.e. activates) a session with the gateway node 111 (step S21). The session thus activates exemplarily is a PDP (packet data protocol) context. In step S22, the gateway 111 inquires the subscription profile node 112 in order to determine active services of the subscriber of the terminal 12. In step S23, the gateway 111 inquires the charging system node 113 in order to determine available quota for the subscriber of the terminal 12. Thereupon, a normal service usage of the terminal 12 (and thus its subscriber) at the interconnected data networks 13 is executed (step S24) via the gateway 111 in case it is determined in steps S22 and S23 that the subscriber of the terminal has such an active service and sufficient quota available.

When wishing to access an information portal for, for example, obtaining information about the services activated and the quota available, the subscriber of the terminal 12 has to access the portal engine node 114. This is to be executed besides and independent of the ongoing normal service usage according to step S24.

In step S25 of Fig. 1, the terminal performs accessing a portal at the portal engine node 114 via the gateway node 111 so as to invoke at least one of information and management services via the service portal. In order to be allowed to access the desired portal, the terminal/subscriber 12 first has to authenticate itself/himself at the portal engine node 114 (step S26). Since the portal engine node 114 according to the prior art is a discrete network element separate from the gateway and other network elements, the portal engine node 114 has to perform an information request operation (step S27) when being accessed by a subscriber for providing an information portal. According to the prior art depicted such an information request has to be carried out at the gateway node, the subscription profile node 112, and the charging system node 113. Only after having queried all of these network nodes, the portal engine node 114 is able to issue a response via the gateway node 111 to the subscriber 12 (step S28) and thus to provide the information portal requested.

Furthermore, the following is to be noted in connection with information portals according to the prior art.

The existing portals for information, service and subscription activation have limited support for ongoing connections, e.g. PDP contexts. The portal is usually provided in some distinct control network element. The information portal will then require authentication, so typically a subscriber needs yet another password for this purpose. When the service or subscription has been activated, the service or subscription is typically not immediately available, because it will take some time before the information about the activated service or subscription reaches the actual gateway and then the subscriber.

Additionally, a portal engine node such as a Nokia^{®} CA node has the following disadvantages:
- There exists a need for extra signaling and an extra signaling interface between the portal engine node and the actual gateway.
- The portal engine node still needs to communicate with a charging system when the costs of the new services and/or subscriptions need to be covered. A distribution of the quota to multiple devices further increases the complexity of the system.
- The portal engine node cannot provide as much information about an ongoing connection, e.g. a PDP context, as a gateway node. Thus, it si not possible to implement full information portal functionality and performance in the portal engine node.
- The portal engine node cannot offer full control for connection management, such as for a PDP context, without explicit signaling with another gateway node. That is, it is only provides limited support for ongoing connections.

For a skilled person, there are also known some other similar existing systems within the framework discussed above. However, such prior art systems are usually subject to several drawbacks. For example, the user must be authenticated separately when trying to access an information portal. That is, an additional login procedure to the portal is required addition to a connection activation procedure. For this purpose, the user needs to have another password. Additionally, according to conventional systems there are needed separate portal servers, and thus respective signaling between the individual network elements is to be performed. Since it is needed that information are retrieved from various databases and registers before they can be provided to the user via the portal, further signaling is needed and a delay in information provisioning is introduced. Furthermore, according to existing solutions within the framework of intelligent content delivery (ICD), there exist approaches where separate portals are needed for different services, which could as well be located at different network nodes, thus further increasing system complexity and decreasing overall system capacity. For example, there may be separate self-service portals for information querying purposes and for subscription management purposes.

Consequently, a solution to the above problems and drawbacks is needed for providing an information portal for subscribers, which could provide information about an active, ongoing connection.

### Summary of the invention

Consequently, it is an object of the present invention to remove the above drawbacks inherent to the prior art and to provide an accordingly configured method, network node, terminal, system, and computer program product.

According to a first aspect of the invention, this object is for example achieved by a method of providing a subscriber of a communication system with the capability to access properties of an ongoing connection between a terminal of the subscriber and a gateway node of the communication system, wherein the gateway node constitutes an interface between at least two packet-switched communication networks of the communication system, the method comprising the steps of providing, at the gateway node, a service portal offering information and management services relating to a record of at least one property of the ongoing connection; and invoking, by the subscriber terminal, at least one of the information and management services directly via the service portal during the ongoing connection.

According to further advantageous developments at least one of the following applies:
- the step of invoking at least one of the information and management services further comprises a step of addressing the service portal based on a uniform resource locator, URL, address;
- the step of invoking at least one of the information and management services further comprises the steps of transmitting a request, by the subscriber terminal, at least one of the information and management services at the service portal; retrieving the at least one requested service at the gateway node; and provisioning the at least one service to the subscriber;
- the step of retrieving the at least one requested service further comprises a step of checking, at the gateway node, whether the at least one of the information and management services requested by the subscriber terminal is allowed for the subscriber;
- the method further comprises a step of denying the subscriber terminal the requested service, if it is detected in the step of checking that the service is not allowed for the subscriber;
- the step of provisioning further comprises a step of provisioning a notification service to the subscriber terminal, the provisioned notification service being dependent on a reason for denying the requested service;
- the step of invoking is performed without requiring an authentication of the subscriber;
- the at least one service comprises querying information pertaining to properties of connection settings and conditions;
- the properties of connection settings and conditions comprise charging properties pertaining to the ongoing connection;
- the at least one service comprises managing properties of subscription settings of the subscriber; and/or
- the ongoing connection is an active packet data protocol, PDP, context session.

According to a second aspect of the invention, this object is for example achieved by a network node of a communication system, configured to provide a subscriber of the communication system with the capability to access properties of an ongoing connection between a terminal of the subscriber and the network node, wherein the network node is a gateway node constituting an interface between at least two packet-switched communication networks of the communication system, the network node comprising transceiver devices configured to perform transmissions on a connection between the terminal and the network node; providing devices configured to provide, at the gateway node, a service portal offering information and management services relating to a record of at least one property of the ongoing connection.

According to further advantageous developments at least one of the following applies:
- the providing devices further comprise: request devices configured to process a request, by the subscriber terminal, for at least one of the information and management services at the service portal; retrieving devices configured to retrieve the at least one requested service; and provisioning devices configured to provision the at least one service to the subscriber;
- the retrieving devices are further configured to check whether the at least one of the information and management services requested by the subscriber terminal is allowed for the subscriber;
- the retrieving devices are further configured to deny the subscriber terminal the requested service, if it is detected in the retrieving devices that the service is not allowed for the subscriber;
- the provisioning devices are further configured to provision a notification service to the subscriber terminal, the provisioned notification service being dependent on a reason for denying the requested service;
- the network node further comprises database devices configured to store subscriber data and connection data associated with the ongoing connection;
- the providing devices are further configured to query information pertaining to properties of connection settings and conditions;
- the properties of connection settings and conditions comprise charging information pertaining to the ongoing connection;
- the providing devices are further configured to manage properties of subscription settings of the subscriber;
- the network node is a gateway network element according to 3GPP specifications;
- the network node is a gateway network element according to 3GPP2 specifications; and/or
- the network node is a gateway network element according to an online charging system, OCS, functionality.

Further according to this aspect, there is provided a network node for providing a subscriber of a communication system with the capability to access properties of an ongoing connection between a terminal of the subscriber and the network node, wherein the network node is a gateway node of the communication system constituting an interface between at least two packet-switched communication networks of the communication system, the network node comprising means for performing transmissions on a connection between the terminal and the network node; means for providing, at the gateway node, a service portal offering information and management services relating to a record of at least one property of the ongoing connection.

According to a third aspect of the invention, this object is for example achieved by a terminal of a communication system, configured to provide a subscriber of the communication system using the terminal with the capability to access properties of an ongoing connection between the terminal of the subscriber and a gateway node, wherein the gateway node constitutes an interface between at least two packet-switched communication networks of the communication system, the terminal comprising transceiver devices configured to perform transmissions on a connection between the terminal and the gateway node; and invoking devices configured to invoke at least one of information and management services provided at the gateway node directly via a service portal at the gateway node during the ongoing connection.

According to further advantageous developments at least one of the following applies:
- the invoking devices further comprise addressing devices configured to address the service portal based on a uniform resource locator, URL, address;
- the invoking devices further comprise: request devices configured to request at least one of the information and management services at the service portal; and execution devices configured to execute the at least one provisioned service;
- the terminal is based on 3GPP specifications; and/or
- the terminal is based on 3GPP2 specifications.

Further according to this aspect, there is provided a terminal for providing a subscriber of a communication system using the terminal with the capability to access properties of an ongoing connection between the terminal of the subscriber and a gateway node of the communication system, wherein the gateway node constitutes an interface between at least two packet-switched communication networks of the communication system, the terminal comprising means for performing transmissions on a connection between the terminal and the gateway node; and means for invoking at least one of information and management services provided at the gateway node directly via a service portal at the gateway node during the ongoing connection.

According to a fourth aspect of the invention, this object is for example achieved by a system for providing a subscriber of a communication system with the capability to access properties of an ongoing connection between a terminal of the subscriber and a gateway node of the communication system, wherein the gateway node constitutes an interface between at least two packet-switched communication networks of the communication system, the system comprising:
at least one network node of a communication system, wherein the at least one network node is the gateway node, comprising transceiver devices configured to perform transmissions on a connection between the terminal and the network node; providing devices configured to provide, at the gateway node, a service portal offering information and management services relating to a record of at least one property of the ongoing connection, and
at least one subscriber terminal of a communication system, wherein the subscriber is using the at least one subscriber terminal, comprising: transceiver devices configured to perform transmissions on a connection between the terminal and the gateway node; and invoking devices configured to invoke at least one of information and management services provided at the gateway node directly via a service portal at the gateway node during the ongoing connection.

According to further advantageous developments at least one of the following applies:
- the system is configured to perform the steps of providing, at the gateway node, a service portal offering information and management services relating to a record of at least one property of the ongoing connection; and invoking, by the subscriber terminal, at least one of the information and management services directly via the service portal.
- the communication system comprises a packet core system; and/or
- the communication system comprises an IP multimedia subsystem, IMS.

According to a fifth aspect of the invention, this object is for example achieved by a computer program product being loadable into a memory of a digital processing means and comprising software code portions for performing, when said product is run on said digital processing means, the steps of: providing, at the gateway node, a service portal offering information and management services relating to a record of at least one property of the ongoing connection; and invoking; by the subscriber terminal, at least one of the information and management services directly via the service portal during the ongoing connection.

It is an advantage of the present invention that there is provided a portal, which could provide information about an active, ongoing connection.

Further, with the embodiments of the present invention subscribers can advantageously get information on the dynamic status of an active connection. Thereby, as a further economical advantage, the trust towards the service provider and the operator is increased.

It is further advantageous that an information portal is provided by an operator as an additional service for the subscribers.

It is another advantage of the present invention that the portal offers information and/or management services to subscribers of communication systems, the information and/or management services relating to a record of at least one property of an ongoing connection.

Thereby, it is another advantage that service and subscription activation can be done without delay for ongoing connections.

Furthermore, there is less signaling needed in the communication system with the portal being provided directly at a gateway node. And thus, communication capacity can be saved.

As a yet further advantageous facet of embodiments of the present invention, the subscriber does not need to login to a service portal separately, and thus does not need an additional password or the like.

### Brief description of the drawings

In the following, the present invention will be described in greater detail with reference to the accompanying drawings, in which

Fig. 1 shows a block diagram illustrating a basic structure of a mobile communication system according to the prior art;

Fig. 2 shows an example of an information portal implementation according to the prior art;

Fig. 3 shows a block diagram illustrating a basic structure of a mobile communication system according to an embodiment of the present invention;

Fig. 4 shows a schematic representation of an active session repository within a gateway node according to an embodiment of the present invention;

Fig. 5 shows an information portal implementation according to an embodiment of the present invention;

Fig. 6 shows a schematic illustration of a terminal using a portal page according to an embodiment of the present invention;

Fig. 7 shows a schematic illustration of a terminal managing subscription settings of the subscriber using a portal page according to an embodiment of the present invention; and

Fig. 8 shows a block diagram illustrating a configuration of a system comprising a terminal and a gateway network node according to an embodiment of the present invention.

### Detailed description of embodiments of the present invention

The present invention is described herein with reference to a particular non-limiting example. A person skilled in the art will appreciate that the invention is not limited to this or any other example, and may be more broadly applied

In particular, the present invention is described in relation to an 3GPP example scenario and implementation. As such, the description of the embodiments given herein specifically refers to terminology which is directly related to 3GPP specifications. Such terminology is however only used in the context of the presented examples, and does not limit the invention in any way.

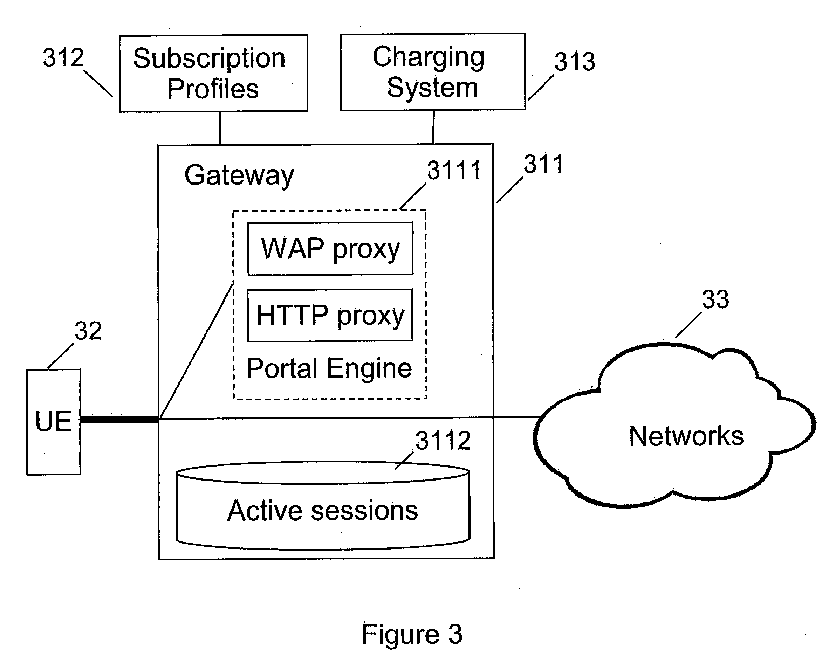

Fig. 3 shows a block diagram illustrating a basic structure of a mobile communication system according to an embodiment of the present invention.

For the sake of simplicity, the communication system is illustrated only by way of those entities being most relevant for the understanding of the present invention. (It is to be noted that this similarly also applies to the following figures.)

According to Fig. 3, a terminal 32 is connected to data networks 33 via a gateway node 311 being a part of a communication network. The terminal 32 can be a user equipment, thus being denoted by UE, a mobile station MS, or any other terminal equipment adapted for the communication network used. The communication network is potentially a 3GPP-based, 3GPP2-based, CDMA-based or GPRS-based network or the like. Data networks 33 according to Fig. 3 can be the Internet, a X.25-based network, or any other data network preferably operating in a packet-switched manner. Representing further parts of the communication network in-between the terminal 32 and the data networks 33, there are illustrated a gateway node 311, a subscription profile node 312, and a charging system node 313, wherein the nodes 312 and 313 are each connected to the gateway node 311.

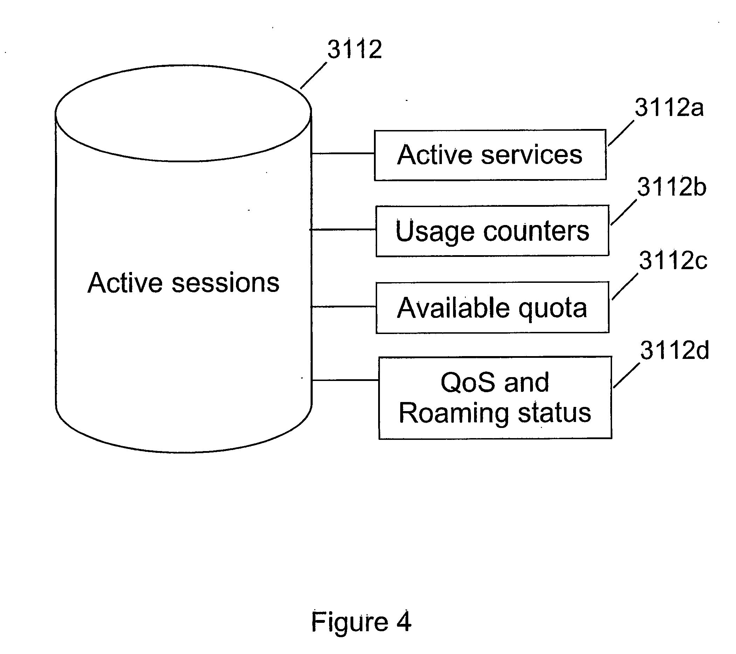

In the gateway node 311 according to the illustrated embodiment, there are provided a portal engine entity 3111 and an active sessions repository (database) 3112. As can be gathered from Fig. 4 showing a schematic representation of the active session repository within the gateway node of Fig. 3, the active session repository comprises information on active sessions 3112a, usage counters 3112b counting for example time, data amounts or the like, information on available quota 3112c, and information on quality of service (QoS) and/or roaming status 3112d. All of these information are logically associated with the active sessions managed in the active sessions repository 3112. Thus, the active sessions repository 3112 maintains a record of at least one property (i.e. state information) about the active sessions and provides for any information needed by the portal engine 3111 for providing a service portal according to the present embodiment.

The portal engine 3111 as such is a functional entity in the gateway node 311. According to the illustrated embodiment of Fig. 3, it comprises at least one of a WAP proxy operating according to the wireless application protocol (WAP) and a HTTP proxy operating according to the hypertext transmission protocol (HTTP). The proxies are used to generate portal pages according to the respective protocol. Thereby, when wishing to access a service portal provided by the portal engine 3111, a subscriber or user of the terminal 32 is able to contact the gateway 311 during an ongoing connection, and to use usual WAP (e.g. WAP 2.0) and/or HTTP transactions in order to retrieve or manage information as desired. In this case, the subscriber or user would for example know a special address such as an uniform resource locator (URL) address, and the information to be retrieved and/or managed would logically be provided behind this (URL) address at the gateway node. The provision of the information to be retrieved and/or managed at the gateway node 311 is mainly accomplished by using the portal engine 31111, the contents of the active sessions repository 3112. The subscription profiles node 312 and the charging system node 313 are not directly needed for providing a requested portal. These nodes simply serve as data sources for the database 3112.

According to the present invention, there is thereby provided an information and/or service portal offering information and management services at the gateway node of an underlying communication system. The services offered usually relate to a record of at least one property of an ongoing connection. Further, there is supported such a portal in conventionally known network nodes (serving as gateway nodes), such as for example an intelligent service node (ISN) or an online service control (OSC) node.

A subscriber or user of a terminal in a (mobile) communication system can thus manage ongoing connections, for example active PDP contexts, via such information and/or service portal. Services and subscriptions can be activated immediately for the ongoing (PDP context) connection. The portal can also be used to monitor the quality of service (QoS) status of the ongoing connection, and subscribers are enabled even to try to change the QoS status of the ongoing connection via the portal provided.

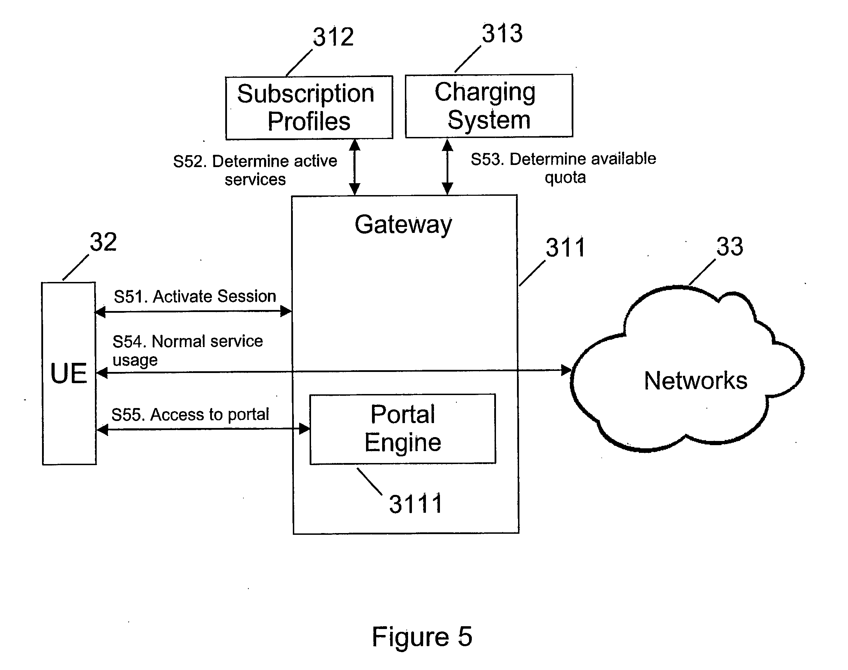

Fig. 5 shows an information portal implementation according to an embodiment of the present invention. Namely, there is shown a method of providing a subscriber with such a portal within the previously described communication system.

In step S51 of Fig. 5, the subscriber or user of the terminal 32 performs a session/connection activation with the gateway node 311 (as is also the case in the procedure according to Fig. 2 above). Then, the gateway node 311 inquires the subscription profile node 312 in order to determine active services of the subscriber of the terminal 32 (step S52) and the charging system node 313 in order to determine available quota for the subscriber of the terminal 32 (step S53). Thereupon, again a normal service usage of the terminal 32 at the interconnected data networks 33 is executed (step S54) in case it is determined in steps S52 and S53 that the subscriber of the terminal has such an active service and sufficient quota available. Namely, based on the received quota and services, the gateway node 311 allows traffic from the terminal 32 to the data networks 33.

In step S55, the subscriber or user of the terminal 32 accesses the portal engine 3111 at the gateway node 311, and thereby invokes the desired services offered by the information and service portal which is provided by the portal engine function. According to the present embodiment of the invention, this can be executed during and for the ongoing connection activated in steps S51 to S53.

In short, when the terminal accesses the portal, the portal engine can provide most of the required information already with the information stored in the local active sessions repository.

In summary, according to the present invention, there is provided a method of providing a subscriber of a communication system with the capability to access properties of an ongoing connection between a terminal of the subscriber and a gateway node of the communication system, wherein the gateway node constitutes an interface between at least two packet-switched communication networks of the communication system, the method comprising the steps of providing, at the gateway node, a service portal offering information and management services relating to a record of at least one property of the ongoing connection; and invoking, by the subscriber, at least one of the information and management services directly via the service portal during the ongoing connection.

As compared to the prior art arrangement of Fig. 2, it can be gathered that according to the present embodiment of the invention, less messaging is used. Accordingly, less signaling is needed and an earlier provisioning of the services and information desired is assured. In detail, an authentication step can be skipped, because the terminal has already been authenticated when the data session has been created. The "Info request" step of Fig. 2 can also be skipped, at least in most cases, because the gateway node already has all the required information available.

According to an embodiment of the present invention, it is advantageous that the portal (i.e. the portal engine) is implemented in a gateway node such as an intelligent service node (ISN). That way there is no need to provide any authentication of the subscriber accessing the portal and/or invoking any service offered by the portal.

An authorization would be based on the following factors:
- If a HTTP or WAP request for an information portal address, e.g. URL address, is not coming from a Gn or Gp interface (i.e. from a serving GPRS support node, for example), the request is denied.
- A HTTP or WAP request must be associated with any of the ongoing connections, e.g. active PDP contexts. There is no need for an explicit authentication, because a connection (i.e. PDP context) is always linked to a certain subscriber thus being authenticated anyway.
- When the subscriber is known at the gateway node (e.g. ISN), the information related to the connection (e.g. PDP context) can be provided at the information portal. This is possible without any querying of other network nodes.

According to an embodiment of the present invention, the information and/or service portal is a graphics-based means for content delivery such as e.g. a web page. This is implementable by using, depending on the architectural environment, a hypertext markup language (HTML) or a wireless markup language (WML).

The thus provided portal at the gateway node basically offers information and management services (such as for example various statistics of an ongoing connection in terms of monetary units or time), and could exemplarily contain the following data, i.e. record of properties (cf. active session repository contents as shown in Fig. 4):
- a set of active services;
- currently used services (i.e. active service flows);
- usage of the active services in terms of volume, hits and/or time;
- amount of available quota for services (for example for prepaid subscribers);
- roaming status;
- summary of the current quality of service (QoS) settings;
- bulletin board messages, which the operator can configure to be provided for mobile subscribers; and/or
- other relevant information.

In more general terms, the portal comprises for example administrative information pertaining to connection settings and conditions (including charging information pertaining to the ongoing connection) and subscription settings of the subscriber. The information and management services offered by the portal may thus comprise querying properties of connection settings and conditions as well as managing properties of subscription settings.

If monetary units need to be indicated to the subscriber, an embodiment of the present invention provides that the gateway node is able to use a Diameter interface, i.e. an interface operating according to a Diameter Credit Control Application (DCCA), to convert the metering units (e.g. time) to monetary units (e.g. Euro or Dollar) before presenting the information to the subscriber.

An activation or deactivation of services and subscriptions requires some additional signaling as compared with a mere querying and/or managing of information. When a service or subscription has been activated, the gateway node shall communicate with control nodes, such as an online charging system (OCS) node or functionality (such as for example a Nokia^{®} online service control (OSC) node) or a charging rule function (CRF) node, by using a Diameter Credit Control Application (DCCA). The control node/nodes will indicate whether the subscriber can activate or deactivate the service or subscription, and the node/nodes will also store information about the new activations or deactivations to a subscription database. From an implementation point of view, such a subscription database can be realized in the subscription profiles node 312 according to Fig. 5. When the signaling with the control node/nodes has been completed, the subscriber can immediately start using the activated service or subscription, which is beneficial as compared with the

### prior art.

As a further advantageous embodiment of the inventive implementation according to Fig. 5, the following procedure is presented.

The terminal 32 tries to performs a normal service usage, i.e. requests to access some service in any one of the data networks 33 (cf. step S54 of Fig. 5). For this purpose, either HTTP or WAP (e.g. WAP 2.0) is used by the terminal 32, as explained above. For processing the service request, the gateway node 311 uses its local database relating to active sessions, i.e. repository 3112. Then, the gateway node 311 checks whether the terminal 32 is allowed to access the requested service. The reason for detecting that a service is not allowed can be one or more of the following:
a.) Requested service is not allowed because terminal is roaming (i.e. service is allowed in home network of the terminal only);
b.) Requested service is not allowed because terminal is using wrong (inadmissible) kind of radio or access network type (e.g. service is available in 3G networks only and the terminal is currently located in a 2G network);
c.) Requesting terminal has no subscription for the requested service;
d.) Requesting terminal or user has no budget (i.e. not enough money or no sufficient quota) available for the requested service;
e.) Local rules (e.g. legislation rules and/or operator service providing rules) require that the price of the service is shown to the user before access to the service is allowed.

Accordingly, in all of the above cases, the gateway node 311 denies the requested service usage by the terminal 32 or its user. Instead of the requested HTML or WML page, i.e. instead of the requested service portal, the gateway node 311 provides another (default) portal, i.e. shows another (default) page. This portal or page is in accordance with the above case of non-allowance, and thus its content depends on the above case and might be a notification as follows:
a.) Page/portal indicates that the requested service is not allowed because the terminal is roaming;
b.) Page/portal indicates that the service is not allowed because the terminal is using a wrong (inadmissible) radio or access network type;
c.) Page/portal indicates that there is no subscription for the requested service.
   In this case, the page/portal immediately offers a page/portal where the user can activate a respective subscription. If the user activates such a subscription, the service immediately becomes available, which is advantageous as compared with prior art solutions.
d.) Page/portal indicates that the requesting terminal or user has no or not enough budget.
   The user is then provided with an opportunity to put money to his/her prepaid account (e.g. by means of an electronic credit card transaction). To this effect, the gateway node is adapted to use a Diameter Credit Control Application (DCCA) to send the given amount of money to an online charging system node or functionality, which manages the actual prepaid account. After sufficient money has been deposited, the requested service is allowed.
e.) Page/portal indicates the price, and when the user has confirmed that he/she accepts the price, the requested page/portal (i.e. service) is provided by the gateway node.

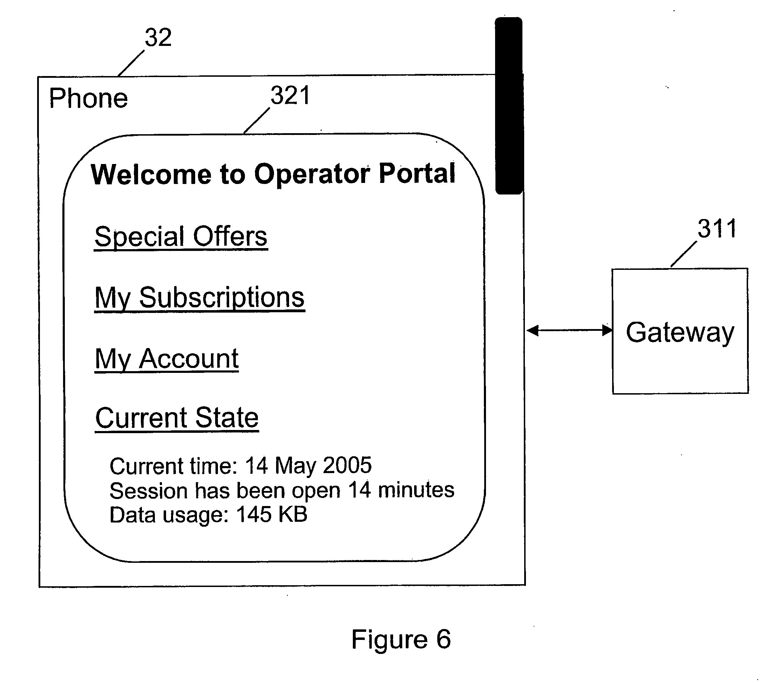

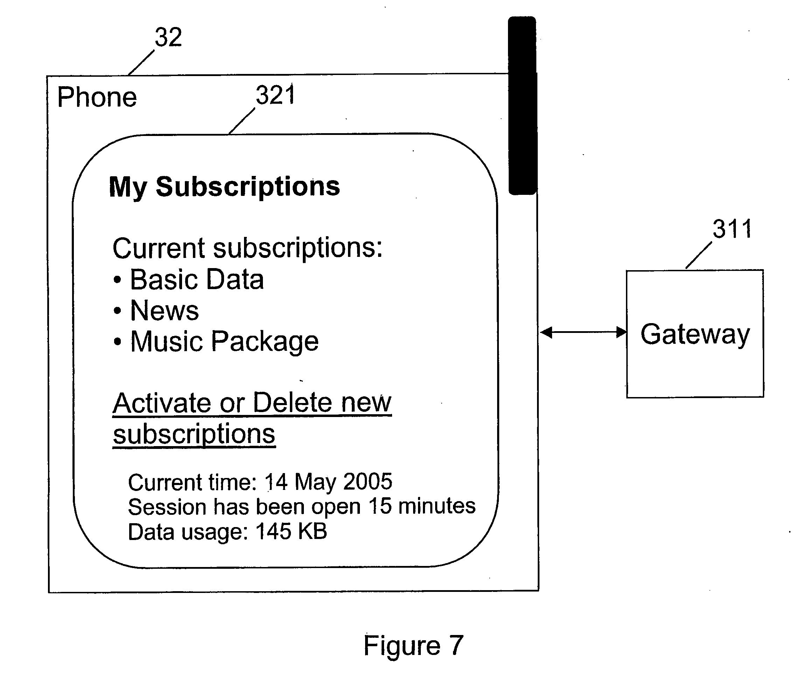

Figs. 6 and 7 illustrate implementation examples of an information and service portal according to an embodiment of the present invention.
Fig. 6 shows a schematic example illustration of a terminal using a portal page according to an embodiment of the present invention. In this figure, the terminal 32 is connected to the gateway node 311, as described above. The situation represents a situation according to step S55 of Fig. 5.

The portal provided by the gateway node 311 is displayed on a display 321 (e.g. a liquid crystal display) of the terminal 32. The thus illustrated display contents represents a starting page of the portal. The subscriber may in this example choose between the options "Special Offers", "My Subscriptions", "My Account", and "Current State".

As a basic information, there is displayed at the bottom of the screen 321 that the current date is May 14, 2005, that the connection is already active for 14 minutes and that 145KB of data have already been exchanged, i.e., among others, how much time and volume has been used during the active connection/session.

Fig. 7 shows a schematic example illustration of a terminal managing subscription settings of the subscriber using a portal page according to an embodiment of the present invention. In this figure, the situation is similar to the one of Fig. 6, i.e. the terminal 32 is connected to gateway node 311 and resides in step S55 according to Fig. 5.

However, in Fig. 7, the subscriber has already chosen the option "My Subscriptions" in the situation of Fig. 6. In the submenu of the option "My Subscriptions", there is displayed that the subscriber has currently subscribed to the services "Basic Data", "News", and "Music Package".

For activating new subscriptions and for deleting (deactivating) current subscriptions, there is provided an option "Activate or Delete new subscriptions" below the current status information and above the standard basic information as mentioned in connection with Fig. 6.

Once more, it is to be noted that all information displayed in Figs. 6 and 7 by way of example can be shown with the local information stored at the gateway node. Accordingly, no signaling and no further interfaces are needed.

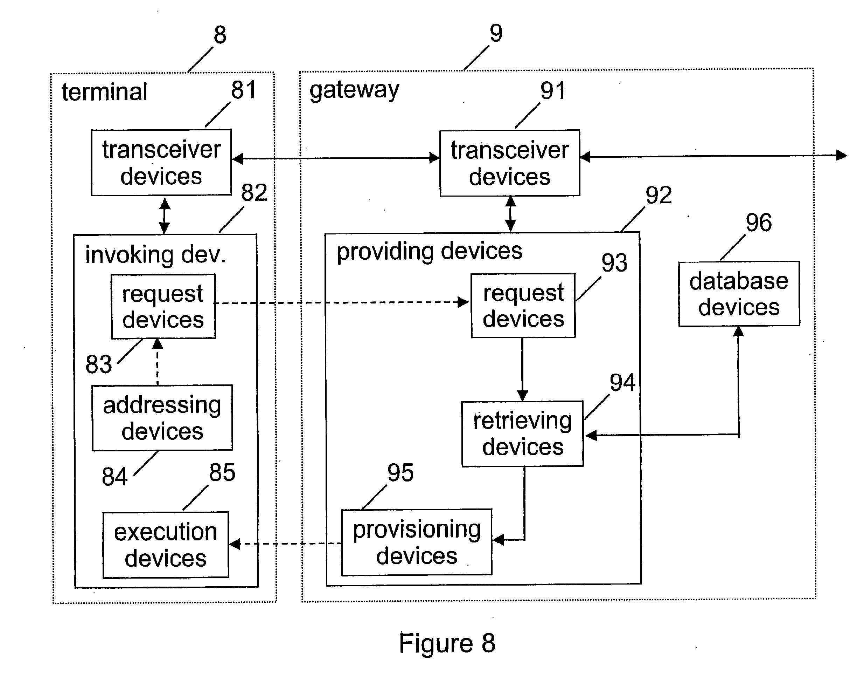

Fig. 8 shows a block diagram illustrating a configuration of a system comprising a terminal and a gateway network node according to an embodiment of the present invention.

According to Fig. 8, arrows illustrate links between respective blocks and the orientation of the respective link, i.e. in which direction the link is used. In this regard, solid arrow lines illustrate physical links on which data is physically transmitted, and broken arrow lines illustrate logical links which represent logical connections between respective blocks. Thus, the respective interconnection of nodes, devices, and/or blocks can be gathered from the arrows being depicted in Fig. 8.

In Fig. 8, there is shown a terminal 8 which, according to the present embodiment, represents for example the terminal 32 of Figs. 3 to 7. The terminal 8 comprises transceiver devices 81 which are configured to perform transmissions on a connection between the terminal 8 and a gateway node 9, as is indicated by the respective double-headed arrow. The terminal 8 further comprises invoking devices 82 which are configured to invoke at least one of information and management services directly via a service portal at the gateway node 9 during an ongoing connection. According to the illustrated embodiment, the invoking devices 82 comprise request devices 83, addressing devices 84, and execution devices 85. The request devices 83 are configured to request at least one of the information and management services at the service portal at the gateway node 9, wherein the addressing devices 85 are configured to address the service portal at the gateway node 9 based for example on a uniform resource locator, URL, address. An appropriate URL address for each subscriber and connection is assigned by the operator of the underlying communication network or systems and transferred to the respective subscriber's terminal, for example at the stage of connection/session activation. According to the illustrated embodiment, the addressing devices 84 address the service portal via the request devices 83, i.e. by providing a respective URL address for the request to be sent by the request devices 83. The execution devices 84 of the invoking devices 82 are configured to execute the at least one provisioned service at the terminal 8. For enabling such an execution by the user or subscriber of the terminal 8, the execution devices for example also comprise a display means as a man-machine-interface (cf. display 321 of Fig. 6 and 7).

Furthermore, the gateway node 9 according to the present embodiment of Fig. 8 comprises transceiver devices 91 which are configured to perform transmissions on a connection between the terminal and the network node, more particularly between the transceiver 81 of the terminal 8 and the transceiver 91 of the gateway 9, as well as transmissions to and from other data networks (which is indicated by means of the arrow from the transceiver 91 to the right hand side of the figure). In addition, the gateway node 9 comprises providing devices 92 which are configured to provide a service portal offering at least one of information and management services relating to a record of at least one property of an ongoing connection directly via the service portal. The gateway node further comprises database devices 96 which are configured to store various data such as for example subscriber data and connection data associated with ongoing connections. According to the illustrated embodiment, the providing devices 92 further comprise request devices 93, retrieving devices 94, and provisioning devices 95. The request devices 93 are configured to process a request, by a subscriber of the terminal 8, for at least one of the information and management services offered at the service portal which is provided by the providing devices 92 as such. The retrieving devices 94 are configured to retrieve the at least one requested service at the providing devices 92 of the gateway node 9. For this purpose the retrieving devices 94 make use of data stored at the database devices 96. The provisioning devices 95 are configured to provision the at least one requested service to the requesting subscriber of the terminal 8, more particularly to the execution devices 85 of the invoking devices 82 of the terminal 8.

According to still another embodiment of the (gateway) network node of the present invention, the retrieving devices 94 are further configured to check whether the at least one of the information and management services requested by the subscriber is allowed for the subscriber (i.e. terminal 8). For this purpose, the retrieving devices 94 are configured to use the database devices 96 and their contents as described above. Also, the retrieving devices 94 are further configured to deny the requesting subscriber (i.e. terminal 8) the requested service, if it is detected in the retrieving devices 94 that the service is not allowed for the subscriber. The provisioning devices 95 are further configured to provision a notification service (as a default service) to the subscriber (i.e. terminal 8), the provisioned notification service being dependent on a reason for denying the requested service by the retrieving devices 94.

From a logical or methodical point of view, the request devices 83 of the invoking devices 82 of the terminal 8 issue, initiated by the user or subscriber of the terminal 8, a request for access to the service portal at the gateway node 9. This request is addressed to the appropriate service portal by means of an URL address provided by thee addressing devices 84. The request is transferred to the providing devices 92 of the gateway 9. Namely, the request is forwarded to the request devices 93 of the providing devices 92. The request devices 93 process the request accordingly and forward it to the retrieving devices 94 which access the database devices 96 and, afterwards, the provisioning devices 95 (such as for example the active sessions repository 3112 of Fig. 3) for providing the at least one requested information and management service offered by the service portal. The provisioning devices 95 then provide the portal including the offered and requested information and management services to the requesting subscriber of the terminal 8, in particular to the execution devices 85 of the invoking devices 82 of the terminal 8. The execution devices 85 thus for example provide the services to a man-machine-interface such as a display means of the terminal 8 so that the subscriber of the terminal 8 is enabled to handle the offered services directly via the provided service portal.

From a physical point of view, all transmissions to be effected during the logical or methodical procedure described above are physically accomplished by the invoking devices 82 and the transceiver devices 81 of the terminal 8, and the transceiver devices 91 and the providing devices 92 of the gateway 9 (as can be gathered by way of the solid arrow lines of Fig. 8).

The terminal and the gateway network node illustrated in Fig. 8 are thus configured for use in a method of providing a subscriber of a communication system with the capability to access properties of an ongoing connection between a terminal of the subscriber and a gateway node of the mobile communication system, wherein the gateway node constitutes an interface between at least two packet-switched communication networks of the mobile communication system.

In general, it is to be noted that the mentioned functional elements, e.g. the invoking or providing devices according to the present invention, and their constituents can be implemented by any known means, either in hardware and/or software, respectively, if it is only adapted to perform the described functions of the respective parts. For example, the invoking devices of the terminal can be implemented by any data processing unit, e.g. a microprocessor, being configured to invoke, by a subscriber of the terminal, at least one of the information and management services offered directly via the service portal during the ongoing connection as defined by the appended claims. The mentioned parts can also be realized in individual functional blocks or by individual devices, or one or more of the mentioned parts can be realized in a single functional block or by a single device. Correspondingly, the above illustration of Fig. 8 is only for illustrative purposes and does not restrict an implementation of the present invention in any way.

Furthermore, method steps likely to be implemented as software code portions and being run using a processor at one of the peer entities are software code independent and can be specified using any known or future developed programming language such as e.g. C, C++, and Assembler. Method steps and/or devices or means likely to be implemented as hardware components at one of the peer entities are hardware independent and can be implemented using any known or future developed hardware technology or any hybrids of these, such as MOS, CMOS, BiCMOS, ECL, TTL, etc, using for example ASIC components or DSP components, as an example. Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to those skilled in the art.

On the basis of the above principles of the present invention, there are provided benefits with respect to integration and centralization in that the communication system or gateway node integrates both the actual gateway functionality (e.g. traffic handling between networks) with portal services. Accordingly, there are also provided real-time benefits by the presented solution because the gateway functionality instantly knows about any changes in other functionalities by portal services. Also, the portal engine gets instant feedback about the current state in the gateway functionality (e.g. current usage). Centralization is provided to that effect that the state and configuration in the gateway and the portal are always synchronized. This is advantageous as compared with known prior art solutions where portal aand gateway are separated, thus the arrangement being more complex because of a need to synchronize state and configuration.

For example, if the portal in a distributed architecture offers a way to activate some subscription to a certain service, there would be a need to guarantee that this service has actually been configured to the gateway. In a centralized architecture in accordance with the above principles, such a guarantee is automatically satisfied.

According to the present invention, there are disclosed means for providing a subscriber of a communication system with the capability to access properties of an ongoing connection between a terminal of the subscriber and a gateway node of the communication system, wherein the gateway node constitutes an interface between at least two packet-switched communication networks of the communication system. A method comprises the steps of providing, at the gateway node, a service portal offering information and management services relating to a record of at least one property of the ongoing connection; and invoking, by the subscriber, at least one of the information and management services directly via the service portal during the ongoing connection. A network node, terminal, system, and computer program product are configured accordingly.

Even though the invention is described above with reference to the examples according to the accompanying drawings, it is clear that the invention is not restricted thereto. Rather, it is apparent to those skilled in the art that the present invention can be modified in many ways without departing from the scope of the inventive idea as disclosed in the appended claims.

## Claims

1. A method of providing a subscriber of a communication system with a capability to access properties of an ongoing connection between a terminal of the subscriber and a gateway node of the communication system, wherein the gateway node serves as an interface between at least two packet-switched communication networks of the communication system, the method comprising the steps of:
providing, at the gateway node, a service portal offering information and management services relating to a record of at least one property of the ongoing connection; and
invoking, by the subscriber terminal, at least one of the information and management services directly via the service portal during the ongoing connection.

2. The method according to claim 1, wherein invoking, by the subscriber terminal, further comprises a step of: addressing the service portal based on a uniform resource locator (URL) address.

3. The method according to claim 1, wherein the invoking, by the subscriber terminal, further comprises the steps of:
transmitting a request, from the subscriber terminal, for at least one requested service of the information and management services at the service portal,
retrieving the at least one of the information and management services at the gateway node, and
providing the at least one of the information and management services to the subscriber terminal.

4. The method according to claim 3, wherein the step of retrieving the at least one of the information and management services further comprises a step of: checking, at the gateway node, whether the at least one of the information and management services requested by the subscriber terminal is allowed for the subscriber.

5. The method according to claim 4, further comprising a step of:
denying the subscriber terminal the requested service, when the at least one of the information and the management services is not allowed for the subscriber.

6. The method according to claim 5, wherein the step of providing further comprises a step of providing a notification service to the subscriber, the notification service being dependent on a reason for denying the requested service.

7. The method according to claim 1, wherein the step of invoking, by the subscriber terminal, is performed without requiring an authentication of the subscriber.

8. The method according to claim 1, wherein the at least one service comprises providing information pertaining to a property of connection settings and conditions in response to a query.

9. The method according to claim 8, wherein the property of the connection settings and conditions comprises a charging property pertaining to the ongoing connection.

10. The method according to claim 1, wherein the at least one of the information and management services comprises permitting managing properties of subscription settings of the subscriber.

11. The method according to claim 1, wherein the ongoing connection is an active packet data protocol (PDP) context session.

12. A network node of a communication system, configured to provide a subscriber of the communication system with a capability to access properties of an ongoing connection between a terminal of the subscriber and the network node, wherein the network node is a gateway node and serves as an interface between at least two packet-switched communication networks of the communication system, the network node comprising:
transceiver devices configured to perform transmissions on a connection between the terminal and the network node;
providing devices configured to provide, at the gateway node, a service portal offering information and management services relating to a record of at least one property of the ongoing connection.

13. The network node according to claim 12, wherein the providing devices further comprise
request devices configured to process a request, from the subscriber terminal, for at least one requested service of the information and management services at the service portal,
retrieving devices configured to retrieve the at least one requested service, and
provisioning devices configured to provide the at least one service to a subscriber terminal.

14. The network node according to claim 13, wherein the retrieving devices are further configured to check whether the at least one of the information and management services requested by the subscriber terminal is allowed for the subscriber.

15. The network node according to claim 14, wherein the retrieving devices are further configured to deny the subscriber terminal the requested service, when the retrieving devices detect that the service is not allowed for the subscriber.

16. The network node according to claim 15, wherein the provisioning devices are further configured to provide a notification service to the subscriber, the notification service being dependent on a reason for denying the requested service.

17. The network node according to claim 12, further comprising:
database devices configured to store subscriber data and connection data associated with the ongoing connection.

18. The network node according to claim 12, wherein the providing devices are further configured to provide information pertaining to a property of connection settings and conditions in response to a query.

19. The network node according to claim 18, wherein the property of the connection settings and conditions comprises a charging information pertaining to the ongoing connection.

20. The network node according to claim 12, wherein the providing devices are further configured to permit managing properties of subscription settings of the subscriber.

21. The network node according to claim 12, wherein the network node comprises a gateway network element meeting 3rd Generation Partnership Project (3GPP) specifications.

22. The network node according to claim 12, wherein the network node comprises a gateway network element meeting 3rd Generation Partnership Project 2 (3GPP2) specifications.

23. The network node according to claim 12, wherein the network node comprises a gateway network element having online charging system (OCS) functionality.

24. A network node for providing a subscriber of a communication system with a capability to access properties of an ongoing connection between a terminal of the subscriber and the network node, wherein the network node is a gateway node of the communication system and serves as an interface between at least two packet-switched communication networks of the communication system, the network node comprising:
means for performing transmissions on a connection between the terminal and the network node; and
means for providing, at the gateway node, a service portal offering information and management service relating to a record of at least one property of the ongoing connection.

25. A terminal of a communication system, configured to provide a subscriber of the communication system using the terminal with a capability to access properties of an ongoing connection between the terminal of the subscriber and a gateway node, wherein the gateway node serves as an interface between at least two packet-switched communication networks of the communication system, the subscriber terminal comprising:
transceiver devices configured to perform transmissions on a connection between the terminal and the gateway node; and
invoking devices configured to invoke at least one information and management service provided at the gateway node directly via a service portal at the gateway node during the ongoing connection.

26. The terminal according to claim 25, wherein the invoking devices further comprise:
addressing devices configured to address the service portal based on a uniform resource locator (URL) address.

27. The terminal according to claim 25, wherein the invoking devices further comprise:
request devices configured to request at least one requested service of the information and management services at the service portal; and
execution devices configured to execute the at least one requested service.

28. The terminal according to claim 25, wherein the terminal is based on 3rd Generation Partnership Project (3GPP) specifications.

29. The terminal according to claim 25, wherein the terminal is based on 3rd Generation Partnership Project 2 (3GPP2) specifications.

30. A terminal for providing a subscriber of a communication system using the terminal with a capability to access properties of an ongoing connection between the terminal of the subscriber and a gateway node of the communication system, wherein the gateway node serves as an interface between at least two packet-switched communication networks of the communication system, the subscriber terminal comprising:
means for performing transmissions on a connection between the terminal and the gateway node; and
means for invoking at least one of information and management service provided at the gateway node directly via a service portal at the gateway node during the ongoing connection.

31. A system for providing a subscriber of a communication system with a capability to access properties of an ongoing connection between a terminal of the subscriber and a gateway node of the communication system, wherein the gateway node serves as an interface between at least two packet-switched communication networks of the communication system, the system comprising:
at least one network node of a communication system, wherein the at least one network node is the gateway node, comprising
transceiver devices configured to perform transmissions on a connection between the terminal and the network node,
providing devices configured to provide, at the gateway node, a service portal offering information and management services relating to a record of at least one property of the ongoing connection; and
at least one subscriber terminal of a communication system, wherein the subscriber is using the at least one subscriber terminal, comprising
transceiver devices configured to perform transmissions on a connection between the terminal and the gateway node, and
invoking devices configured to invoke at least one of information and management service provided at the gateway node directly via a service portal at the gateway node during the ongoing connection.

32. The system according to claim 31, wherein the system is configured to perform the steps of:
providing, at the gateway node, a service portal offering information and management services relating to a record of at least one property of the ongoing connection, and
invoking, by the subscriber terminal, at least one of the information and management services directly via the service portal.

33. The system according to claim 31, wherein the communication system comprises a packet core system.

34. The system according to claim 31, wherein the communication system comprises an IP multimedia subsystem (IMS).

35. A computer program product being loadable into a memory of a digital processing means and comprising software code portions for performing, when the computer program product is run on the digital processing means, a method of providing a subscriber of a communication system with a capability to access properties of an ongoing connection between a terminal of the subscriber and a gateway node of the communication system, wherein the gateway node serves as an interface between at least two packet-switched communication networks of the communication system, the method comprising the steps of:
providing, at the gateway node, a service portal offering information and management services relating to a record of at least one property of the ongoing connection; and
invoking, by the subscriber terminal, at least one of the information and management services directly via the service portal during the ongoing connection.

## Patentansprüche

1. Verfahren zum Bereitstellen einer Fähigkeit für einen Teilnehmer eines Kommunikationssystems, auf Eigenschaften einer laufenden Verbindung zwischen einem Endgerät des Teilnehmers und einem Gatewayknoten des Kommunikationssystems zuzugreifen, wobei der Gatewayknoten als eine Schnittstelle zwischen zumindest zwei paketorientierten Kommunikationsnetzwerken des Kommunikationssystems dient, wobei das Verfahren die Schritte aufweist:
Bereitstellen eines Dienstportals an dem Gatewayknoten, das Informations- und Verwaltungsdienste mit Bezug auf eine Aufzeichnung von zumindest einer Eigenschaft der laufenden Verbindung anbietet; und
Aufrufen von zumindest einem aus den Informations- und Verwaltungsdiensten durch das Teilnehmerendgerät direkt über das Dienstportal während der laufenden Verbindung.

2. Verfahren nach Anspruch 1, wobei das Aufrufen durch das Teilnehmerendgerät ferner einen Schritt des Adressierens des Dienstportals basierend auf einer Uniform Ressource Locator (URL) Adresse aufweist.

3. Verfahren nach Anspruch 1, wobei das Aufrufen durch das Teilnehmerendgerät ferner die Schritte aufweist:
Übertragen einer Anforderung von zumindest einem angeforderten Dienst der Informations- und Verwaltungsdienste von dem Teilnehmerendgerät an dem Dienstportal,
Abrufen des zumindest einen der Informations- und Verwaltungsdienste bei dem Gatewayknoten, und
Bereitstellen des zumindest einen aus den Informations- und Verwaltungsdiensten an dem Teilnehmerendgerät.

4. Verfahren nach Anspruch 3, wobei der Schritt des Abrufens des zumindest einen aus den Informations- und Verwaltungsdiensten ferner des Schritt aufweist:
Überprüfen an dem Gatewayknoten, ob der zumindest eine aus den Informations- und Verwaltungsdienste, der von dem Teilnehmerendgerät angefordert ist, für den Teilnehmer zugelassen ist.

5. Verfahren nach Anspruch 4, das ferner einen Schritt des Verweigerns des angeforderten Dienstes für das Teilnehmerendgerät aufweist, wenn der zumindest eine der Informations- und Verwaltungsdienste für den Teilnehmer nicht zugelassen ist.

6. Verfahren nach Anspruch 5, wobei der Schritt des Bereitstellens ferner einen Schritt des Bereitstellens eines Notifizierungsdienstes an den Teilnehmer aufweist, wobei der Notifizierungsdienst abhängig ist von einem Grund zum Verweigern des angeforderten Dienstes.

7. Verfahren nach Anspruch 1, wobei der Schritt des Aufrufens durch das Teilnehmerendgerät durchgeführt wird, ohne dass eine Authentifizierung des Teilnehmers erforderlich ist.

8. Verfahren nach Anspruch 1, wobei der zumindest eine Dienst ein Bereitstellen einer Information als Reaktion auf eine Nachfrage aufweist, die eine Eigenschaft von Verbindungseinstellungen und -bedingungen betrifft.

9. Verfahren nach Anspruch 8, wobei die Eigenschaft der Verbindungseinstellungen und -bedingungen eine Abrechnungsinformation aufweist, die die laufende Verbindung betrifft.

10. Verfahren nach Anspruch 1, wobei der zumindest eine aus den Informations- und Verwaltungsdiensten ein Ermöglichen des Verwaltens von Eigenschaften der Teilnahmeeinstellungen des Teilnehmers aufweist.

11. Verfahren nach Anspruch 1, wobei die laufende Verbindung eine aktive Paketdatenprotokoll (PDP) Kontextsitzung ist.

12. Netzwerkknoten eines Kommunikationssystems, das konfiguriert ist, für einen Teilnehmer des Kommunikationssystems eine Fähigkeit bereitzustellen, auf Eigenschaften einer laufenden Verbindung zwischen einem Endgerät des Teilnehmers und dem Netzwerkknoten zuzugreifen, wobei der Netzwerkknoten ein Gatewayknoten ist und als eine Schnittstelle zwischen zumindest zwei paketorientierten Kommunikationsnetzwerken des Kommunikationssystems dient, wobei der Netzwerkknoten aufweist:
Sende-/Empfangseinrichtungen, die konfiguriert sind, Übertragungen über eine Verbindung zwischen dem Endgerät und dem Netzwerkknoten durchzuführen;
Bereitstellungseinrichtungen, die konfiguriert sind, an dem Gatewayknoten ein Dienstportal bereitzustellen, das Informations- und Verwaltungsdienste mit Bezug auf eine Aufzeichnung von zumindest einer Eigenschaft der laufenden Verbindung anbietet.

13. Netzwerkknoten nach Anspruch 12, wobei die Bereitstellungseinrichtungen ferner aufweisen:
Anforderungseinrichtungen, die konfiguriert sind, eine Anforderung von dem Teilnehmerendgerät nach zumindest einem angeforderten Dienst der Informations- und Verwaltungsdienste an dem Serviceportal zu verarbeiten;
Abrufeinrichtungen, die konfiguriert sind, den zumindest einen angeforderten Dienst abzurufen; und
Ausliefereinrichtungen, die konfiguriert sind, den zumindest einen Dienst an ein Teilnehmerendgerät auszuliefern.

14. Netzwerkknoten nach Anspruch 13, wobei die Abrufeinrichtungen ferner konfiguriert sind, zu überprüfen, ob der zumindest eine aus den Informations- und Verwaltungsdienste, der von dem Teilnehmerendgerät angefordert ist, für den Teilnehmer zugelassen ist.

15. Netzwerkknoten nach Anspruch 14, wobei die Abrufeinrichtungen konfiguriert sind, den angeforderten Dienst für das Teilnehmerendgerät zu verweigern, wenn die Abrufeinrichtungen erfassen, dass der Dienst für den Teilnehmer nicht zugelassen ist.

16. Netzwerkknoten nach Anspruch 15, wobei die Ausliefereinrichtungen ferner konfiguriert sind, einen Notifizierungsdienst an den Teilnehmer auszuliefern, wobei der Notifizierungsdienst abhängig ist von einem Grund zum Verweigern des angeforderten Dienstes.

17. Netzwerkknoten nach Anspruch 12, ferner mit Datenbankeinrichtungen, die konfiguriert sind, Teilnehmerdaten und Verbindungsdaten zu speichern, die mit der laufenden Verbindung verknüpft sind.

18. Netzwerkknoten nach Anspruch 12, wobei die Auslieferungseinrichtungen ferner konfiguriert sind, als Reaktion auf eine Abfrage eine Information auszuliefern, die sich auf eine Eigenschaft von Verbindungseinstellungen und -bedingungen bezieht.

19. Netzwerkknoten nach Anspruch 18, wobei die Eigenschaft der Verbindungseinstellungen und -bedingungen eine Abrechnungsinformation aufweist, die die laufende Verbindung betrifft.

20. Netzwerkknoten nach Anspruch 12, wobei die Auslieferungseinrichtung ferner konfiguriert sind, ein Verwalten von Eigenschaften der Teilnahmeeinstellungen des Teilnehmers zu ermöglichen.

21. Netzwerkknoten nach Anspruch 12, wobei der Netzwerkknoten ein Gatewayknotenelement aufweist, dass Dritte Generation Partnerschaftsprojekt (3GPP) Spezifikationen erfüllt.

22. Netzwerkknoten nach Anspruch 12, wobei der Netzwerkknoten ein Gatewayknotenelement aufweist, dass Dritte Generation Partnerschaftsprojekt 2 (3GPP2) Spezifikationen erfüllt.

23. Netzwerkknoten nach Anspruch 12, wobei der Netzwerkknoten eine Gatewaynetzwerkelement mit einem Online-Abrechnungssystem (OCS) aufweist.

24. Netzwerkknoten zum Bereitstellen einer Fähigkeit für einen Teilnehmer eines Kommunikationssystems, auf Eigenschaften einer laufenden Verbindung zwischen einem Endgerät des Teilnehmers und dem Netzwerkknoten zuzugreifen, wobei der Netzwerkknoten ein Gatewayknoten des Kommunikationssystems ist und als eine Schnittstelle zwischen zumindest zwei paketorientierten Kommunikationsnetzwerken des Kommunikationssystems dient, wobei der Netzwerkknoten aufweist:
eine Vorrichtung zum Durchführen von Übertragungen über eine Verbindung zwischen dem Endgerät und dem Netzwerkknoten;
eine Vorrichtung zum Bereitstellen eines Dienstportals an dem Gatewayknoten, das einen Informations- und Verwaltungsdienst mit Bezug auf eine Aufzeichnung von zumindest einer Eigenschaft der laufenden Verbindung anbietet.

25. Endgerät eines Kommunikationssystems, das konfiguriert ist, einem Teilnehmer des Kommunikationssystems, der das Endgerät nutzt, eine Fähigkeit bereitzustellen, auf Eigenschaften einer laufenden Verbindung zwischen dem Endgerät des Teilnehmers und einem Gatewayknoten zuzugreifen, wobei der Gatewayknoten als eine Schnittstelle zwischen zumindest zwei paketorientierten Kommunikationsnetzwerken des Kommunikationssystems dient, und das Teilnehmerendgerät aufweist:
Sende-/Empfangseinrichtungen, die konfiguriert sind, Übertragungen auf einer Verbindung zwischen dem Endgerät und dem Gatewayknoten durchzuführen; und
Aufrufeinrichtungen, die konfiguriert sind, zumindest einen an dem Gatewayknoten bereitgestellten Informations- und Verwaltungsdienst direkt über ein Dienstportal an dem Gatewayknoten während der laufenden Verbindung aufzurufen.

26. Endgerät nach Anspruch 25, wobei die Aufrufeinrichtungen ferner Adressiereinrichtungen aufweisen, die konfiguriert sind, das Dienstportal basierend auf einer Uniform Resource Locator (URL) Adresse zu adressieren.

27. Endgerät nach Anspruch 25, wobei die Aufrufeinrichtungen ferner aufweisen:
Anforderungseinrichtungen, die konfiguriert sind, zumindest einen angeforderten Dienst der Informations- und Verwaltungsdienste an dem Dienstportal anzufordern; und
Ausführungseinrichtungen, die konfiguriert sind, zumindest einen angeforderten Dienst auszuführen.

28. Endgerät nach Anspruch 25, wobei das Endgerät auf den Dritte Generation Partnerschaftsprojekt (3GPP) Spezifikationen basiert.

29. Endgerät nach Anspruch 25, wobei das Endgerät auf den Dritte Generation Partnerschaftsprojekt 2 (3GPP2) Spezifikationen basiert.

30. Endgerät zum Bereitstellen einer Fähigkeit für einen Teilnehmer eines Kommunikationssystems, der das Endgerät nutzt, auf Eigenschaften einer laufenden Verbindung zwischen dem Endgerät des Teilnehmers und einem Gatewayknoten des Kommunikationssystems zuzugreifen, wobei der Gatewayknoten als eine Schnittstelle zwischen zumindest zwei paketorientierten Kommunikationsnetzwerken des Kommunikationssystems dient, und das Teilnehmerendgerät aufweist:
eine Vorrichtung zum Durchführen von Übertragungen auf einer Verbindung zwischen dem Endgerät und dem Gatewayknoten durchzuführen; und
eine Vorrichtung zum Aufrufen von zumindest aus einem an dem Gatewayknoten bereitgestellten Informations- und Verwaltungsdienst direkt über ein Dienstportal an dem Gatewayknoten während der laufenden Verbindung.

31. System zum Bereitstellen einer Fähigkeit für einen Teilnehmer eines Kommunikationssystems, auf Eigenschaften einer laufenden Verbindung zwischen einem Endgerät des Teilnehmers und einem Gatewayknoten des Kommunikationssystems zuzugreifen, wobei der Gatewayknoten als eine Schnittstelle zwischen zumindest zwei paketorientierten Kommunikationsnetzwerken des Kommunikationssystems dient, und das System aufweist:
zumindest einen Netzwerkknoten eines Kommunikationssystems, wobei der zumindest eine Netzwerkknoten der Gatewayknoten ist, der aufweist:
Sende-/Empfangseinrichtungen, die konfiguriert sind, Übertragungen über eine Verbindung zwischen dem Endgerät und dem Netzwerkknoten durchzuführen;
Bereitstellungseinrichtungen, die konfiguriert sind, an dem Gatewayknoten ein Dienstportal bereitzustellen, das Informations- und Verwaltungsdienste mit Bezug auf eine Aufzeichnung von zumindest einer Eigenschaft der laufenden Verbindung anbietet; und
zumindest ein Teilnehmerendgerät eines Kommunikationssystems, wobei der Teilnehmer das zumindest eine Teilnehmerendgerät nutzt, mit:
Sende-/Empfangseinrichtungen, die konfiguriert sind, Übertragungen auf einer Verbindung zwischen dem Endgerät und dem Gatewayknoten durchzuführen; und
Aufrufeinrichtungen, die konfiguriert sind, zumindest einen an dem Gatewayknoten bereitgestellten Informations- und Verwaltungsdienst direkt über ein Dienstportal an dem Gatewayknoten während der laufenden Verbindung aufzurufen.

32. System nach Anspruch 31, wobei das System konfiguriert ist, die Schritte durchzuführen:
Bereitstellen eines Dienstportals an dem Gatewayknoten, das Informations- und Verwaltungsdienste mit Bezug auf eine Aufzeichnung von zumindest einer Eigenschaft der laufenden Verbindung anbietet; und
Aufrufen von zumindest einem aus den Informations- und Verwaltungsdiensten durch das Teilnehmerendgerät direkt über das Dienstportal.

33. System nach Anspruch 31, wobei das Kommunikationssystem ein Paketkernsystem aufweist.

34. System nach Anspruch 31, wobei das Kommunikationssystem ein IP Multimedia Subsystem (IMS) aufweist.

35. Computerprogrammprodukt, das in einen Speicher einer digitalen Verarbeitungsvorrichtung geladen werden kann und Softwarecodeanteile aufweist, um, wenn das Computerprogrammprodukt auf der digitalen Verarbeitungsvorrichtung abläuft, ein Verfahren zum Bereitstellen einer Fähigkeit für einen Teilnehmer eines Kommunikationssystems auszuführen, Eigenschaften einer laufenden Verbindung zwischen einem Endgerät des Teilnehmers und einem Gatewayknoten des Kommunikationssystems abzurufen, wobei der Gatewayknoten als eine Schnittstelle zwischen zumindest zwei paketorientierten Kommunikationsnetzwerken des Kommunikationssystems dient, wobei das Verfahren die Schritte aufweist:
Bereitstellen eines Dienstportals an dem Gatewayknoten, das Informations- und Verwaltungsdienste mit Bezug auf eine Aufzeichnung von zumindest einer Eigenschaft der laufenden Verbindung anbietet; und
Aufrufen von zumindest einem aus den Informations- und Verwaltungsdiensten durch das Teilnehmerendgerät direkt über das Dienstportal während der laufenden Verbindung.

## Revendications

1. Procédé destiné à fournir à un abonné d'un système de communication une capacité d'accès à des propriétés d'une connexion en cours entre un terminal de l'abonné et un noeud de passerelle du système de communication, dans lequel le noeud de passerelle sert d'interface entre au moins deux réseaux de communication à commutation de paquets du système de communication, le procédé comprenant les étapes consistant à :
fournir, au noeud de passerelle, un portail de services proposant des services d'information et de gestion relatifs à un enregistrement d'au moins une propriété de la connexion en cours ; et
invoquer, par le terminal d'abonné, au moins l'un des services d'information et de gestion directement par l'intermédiaire du portail de services pendant la connexion en cours.

2. Procédé selon la revendication 1, dans lequel l'étape d'invocation par le terminal d'abonné comprend en outre l'étape consistant à communiquer avec le portail de services sur la base d'une adresse de localisateur de ressource uniforme (URL).

3. Procédé selon la revendication 1, dans lequel l'invocation par le terminal d'abonné comprend en outre les étapes consistant à :
transmettre une demande, du terminal d'abonné, pour au moins un service demandé des services d'information et de gestion au portail de services,
extraire l'au moins un des services d'information et de gestion au noeud de passerelle, et
fournir l'au moins un des services d'information et de gestion au terminal d'abonné.

4. Procédé selon la revendication 3, dans lequel l'étape d'extraction de l'au moins un des services d'information et de gestion comprend en outre l'étape consistant à contrôler, au noeud de passerelle, si l'au moins un des services d'information et de gestion demandé par le terminal d'abonné est autorisé pour l'abonné.

5. Procédé selon la revendication 4, comprenant en outre l'étape consistant à :
refuser au terminal d'abonné le service demandé, lorsque l'au moins un des services d'information et de gestion n'est pas autorisé pour l'abonné.

6. Procédé selon la revendication 5, dans lequel l'étape de prestation comprend en outre l'étape consistant à fournir un service de notification à l'abonné, le service de notification étant dépendant d'une raison de refus du service demandé.

7. Procédé selon la revendication 1, dans lequel l'étape d'invocation, par le terminal d'abonné, est effectuée sans nécessiter d'authentification de l'abonné.

8. Procédé selon la revendication 1, dans lequel l'au moins un service comprend l'étape consistant à fournir des informations concernant une propriété des réglages et conditions de connexion en réponse à une interrogation.

9. Procédé selon la revendication 8, dans lequel la propriété des réglages et conditions de connexion comprend une propriété de facturation concernant la connexion en cours.

10. Procédé selon la revendication 1, dans lequel l'au moins un des services d'information et de gestion comprend l'étape consistant à permettre de gérer des propriétés de réglages d'abonnement de l'abonné.

11. Procédé selon la revendication 1, dans lequel la connexion en cours est une session de contexte de protocole de données en paquets (PDP) active.

12. Noeud de réseau d'un système de configuration, configuré pour fournir à un abonné du système de communication une capacité d'accès à des propriétés d'une connexion en cours entre un terminal de l'abonné et un noeud de réseau, dans lequel le noeud de réseau est un noeud de passerelle et sert d'interface entre au moins deux réseaux de communication à commutation de paquets du système de communication, le noeud de réseau comprenant :
des dispositifs émetteurs récepteurs configurés pour effectuer des transmissions sur une connexion entre le terminal et le noeud de réseau ;
des dispositifs de prestation configurés pour fournir, au noeud de passerelle, un portail de services proposant des services d'information et de gestion relatifs à un enregistrement d'au moins une propriété de la connexion en cours.

13. Noeud de réseau selon la revendication 12, dans lequel les dispositifs de prestation comprennent en outre :
des dispositifs de demande configurés pour traiter une demande, du terminal d'abonné, pour au moins un service demandé des services d'information et de gestion au portail de services,
des dispositifs d'extraction configurés pour extraire l'au moins un service demandé, et
des dispositifs de prestation configurés pour fournir l'au moins un service à un terminal d'abonné.

14. Noeud de réseau selon la revendication 13, dans lequel les dispositifs d'extraction sont en outre configurés pour contrôler si l'au moins un des services d'information et de gestion demandé par le terminal d'abonné est autorisé pour l'abonné.

15. Noeud de réseau selon la revendication 14, dans lequel les dispositifs d'extraction sont en outre configurés pour refuser au terminal d'abonné le service demandé, lorsque les dispositifs d'extraction détectent que le service n'est pas autorisé pour l'abonné.

16. Noeud de réseau selon la revendication 15, dans lequel les dispositifs de prestation sont en outre configurés pour fournir un service de notification à l'abonné, le service de notification étant dépendant d'une raison de refus du service demandé.

17. Noeud de réseau selon la revendication 12, comprenant en outre :
des dispositifs de bases de données configurés pour stocker les données d'abonné et les données de connexion associées à la connexion en cours.

18. Noeud de réseau selon la revendication 12, dans lequel les dispositifs de prestation sont en outre configurés pour fournir des informations concernant une propriété des réglages et conditions de connexion en réponse à une interrogation.

19. Noeud de réseau selon la revendication 18, dans lequel la propriété des réglages et conditions de connexion comprend une information de facturation concernant la connexion en cours.

20. Noeud de réseau selon la revendication 12, dans lequel les dispositifs de prestation sont en outre configurés pour permettre de gérer des propriétés de réglages d'abonnement de l'abonné.

21. Noeud de réseau selon la revendication 12, dans lequel le noeud de réseau comprend un élément de réseau de passerelle conforme aux spécifications 3GPP (3rd Generation Partnership Project - projet de partenariat de troisième génération).

22. Noeud de réseau selon la revendication 12, dans lequel le noeud de réseau comprend un élément de réseau de passerelle conforme aux spécifications 3GPP2 (3rd Generation Partnership Project 2 - projet de partenariat de troisième génération 2).

23. Noeud de réseau selon la revendication 12, dans lequel le noeud de réseau comprend un élément de réseau de passerelle ayant une fonctionnalité de système de facturation en ligne (OCS).

24. Noeud de réseau pour fournir à un abonné d'un système de communication une capacité d'accès à des propriétés d'une connexion en cours entre un terminal de l'abonné et le noeud de réseau, dans lequel le noeud de réseau est un noeud de passerelle du système de communication et sert d'interface entre au moins deux réseaux de communication à commutation de paquets du système de communication, le noeud de réseau comprenant :
des moyens pour effectuer des transmissions sur une connexion entre le terminal et le noeud de réseau ; et
des moyens pour fournir, au noeud de passerelle, un portail de services proposant des services d'information et de gestion relatifs à un enregistrement d'au moins une propriété de la connexion en cours.

25. Terminal d'un système de communication, configuré pour fournir à un abonné du système de communication utilisant le terminal une capacité d'accès à des propriétés d'une connexion en cours entre le terminal de l'abonné et un noeud de passerelle, dans lequel le noeud de passerelle sert d'interface entre au moins deux réseaux de communication à commutation de paquets du système de communication, le terminal d'abonné comprenant :
des dispositifs émetteurs récepteurs configurés pour effectuer des transmissions sur une connexion entre le terminal et le noeud de passerelle ; et
des dispositifs d'invocation configurés pour invoquer au moins un service d'information et de gestion fourni au noeud de passerelle directement par l'intermédiaire d'un portail de services au noeud de passerelle pendant la connexion en cours.

26. Terminal selon la revendication 25, dans lequel les dispositifs d'invocation comprennent en outre :
des dispositifs d'adressage configurés pour adresser le portail de services sur la base d'une adresse de localisateur de ressource uniforme (URL).

27. Terminal selon la revendication 25, dans lequel les dispositifs d'invocation comprennent en outre :
des dispositifs de demande configurés pour demander au moins un service demandé des services d'information et de gestion au portail de services ; et
des dispositifs d'exécution configurés pour exécuter l'au moins un service demandé.

28. Terminal selon la revendication 25, dans lequel le terminal est basé sur les spécifications 3GPP (3rd Generation Partnership Project - projet de partenariat de troisième génération).

29. Terminal selon la revendication 25, dans lequel le terminal est basé sur les spécifications 3GPP2 (3rd Generation Partnership Project 2 - projet de partenariat de troisième génération 2).

30. Terminal pour fournir à un abonné d'un système de communication utilisant le terminal une capacité d'accès à des propriétés d'une connexion en cours entre le terminal de l'abonné et un noeud de passerelle du système de communication, dans lequel le noeud de passerelle sert d'interface entre au moins deux réseaux de communication à commutation de paquets du système de communication, le terminal d'abonné comprenant :
des moyens pour effectuer des transmissions sur une connexion entre le terminal et le noeud de réseau ; et
des moyens pour invoquer au moins un des services d'information et de gestion fournis au noeud de passerelle directement par l'intermédiaire d'un portail de services au noeud de passerelle pendant la connexion en cours.

31. Système pour fournir à un abonné d'un système de communication une capacité d'accès à des propriétés d'une connexion en cours entre un terminal de l'abonné et un noeud de passerelle du système de communication, dans lequel le noeud de passerelle sert d'interface entre au moins deux réseaux de communication à commutation de paquets du système de communication, le système comprenant :
au moins un noeud de réseau d'un système de communication dans lequel au moins un noeud de réseau est le noeud de passerelle, comprenant :
des dispositifs émetteurs récepteurs configurés pour effectuer des transmissions sur une connexion entre le terminal et le noeud de réseau ;
des dispositifs de prestation configurés pour fournir, au noeud de passerelle, un portail de services proposant des services d'information et de gestion relatifs à un enregistrement d'au moins une propriété de la connexion en cours ; et
au moins un terminal d'abonné d'un système de communication, dans lequel l'abonné utilise l'au moins un terminal d'abonné, comprenant :
des dispositifs émetteurs récepteurs configurés pour effectuer des transmissions sur une connexion entre le terminal et le noeud de passerelle ; et
des dispositifs d'invocation configurés pour invoquer au moins un des services d'information et de gestion fourni au noeud de passerelle directement par l'intermédiaire d'un portail de services au noeud de passerelle pendant la connexion en cours.

32. Système selon la revendication 31, dans lequel le système est configuré pour effectuer les étapes consistant à :
fournir, au noeud de passerelle, un portail de services proposant des services d'information et de gestion relatifs à un enregistrement d'au moins une propriété de la connexion en cours, et
invoquer, par le terminal d'abonné, au moins l'un des services d'information et de gestion directement par l'intermédiaire du portail de services.

33. Système selon la revendication 31, dans lequel le système de communication comprend un système de noyaux de paquets.

34. Système selon la revendication 31, dans lequel le système de communication comprend un système multimédia IP (IMS).

35. Produit de programme informatique pouvant être chargé dans une mémoire d'un moyen de traitement numérique et comprenant des parties de code logiciel pour effectuer, lorsque le produit de programme informatique est exécuté sur le moyen de traitement numérique, un procédé consistant à fournir à un abonné d'un système de communication une capacité d'accès à des propriétés d'une connexion en cours entre un terminal de l'abonné et un noeud de passerelle du système de communication, dans lequel le noeud de passerelle sert d'interface entre au moins deux réseaux de communication à commutation de paquets du système de communication, le procédé comprenant les étapes consistant à :
fournir, au noeud de passerelle, un portail de services proposant des services d'information et de gestion relatifs à un enregistrement d'au moins une propriété de la connexion en cours ; et
invoquer, par le terminal d'abonné, au moins l'un des services d'information et de gestion directement par l'intermédiaire du portail de services pendant la connexion en cours.
